# EUROPEAN PATENT APPLICATION

(11) **EP 3 799 036 A1**
(43) Date of publication of application: **31.03.2021**
(21) Application number: 19219804.2
(22) Date of filing: 27.12.2019
(51) Int. Cl.: G10L 15/183, G10L 15/22

(54) **SPEECH CONTROL METHOD, SPEECH CONTROL DEVICE, ELECTRONIC DEVICE, AND READABLE STORAGE MEDIUM**

(30) Priority: 29.09.2019 CN 201910933815
(71) Applicant: Baidu Online Network Technology (Beijing) Co., Ltd., Beijing 100085 (CN)
(72) Inventor: LUO, Yongxi, Beijing, 100085 (CN); WANG, Shasha, Beijing, 100085 (CN)
(74) Representative: Maiwald Patent- und Rechtsanwaltsgesellschaft mbH

(57) **Abstract**

The present disclosure provides a speech control method, a speech control device, an electronic device, and a readable storage medium. The method includes: determining first guide words according to first speech instructions; obtaining second speech instructions and third speech instructions; determining second guide words based on the second speech instructions and the third speech instructions; and prompting the first guide words and the second guide words in a target operating state. A display page can respond to the first speech instructions, a foreground application to which the display page belongs can respond to the second speech instructions, and background applications can respond to the third speech instructions. In the target operating state, audio is continuously acquired to obtain an audio stream, speech recognition is performed on the audio stream to obtain an information stream, and speech control is performed according to the information stream.

## Description

### TECHNICAL FIELD

The present disclosure relates to the field of speech recognition and artificial intelligence technology, and more particularly, to a speech control method, a speech control device, an electronic device, and a readable storage medium.

### BACKGROUND

With the continuous development of artificial intelligence technology and terminal technology, artificial intelligence products, such as intelligent speakers and other electronic devices, are popularized, and users can control the electronic device through speech, to control the electronic device perform corresponding control instructions. When continuous speech interaction is required between the user and the electronic device, or when the user continuously initiates the conversation, the electronic device can be controlled to enter a preset operating state, such as a listening state, to avoid the user from inputting the wake word frequently.

However, in some scenarios, during continuous interaction between the user and the electronic device, when the user cannot accurately input the wake word, frequent input of the wake word may affect the user experience.

### SUMMARY

Embodiments of the present disclosure provide a speech control method. The method includes: determining first guide words according to first speech instructions; obtaining second speech instructions and third speech instructions; determining second guide words based on the second speech instructions and the third speech instructions; and prompting the first guide words and the second guide words in a target operating state. A display page can respond to the first speech instructions, a foreground application to which the display page belongs can respond to the second speech instructions, and background applications can respond to the third speech instructions. In the target operating state, audio is continuously acquired to obtain an audio stream, speech recognition is performed on the audio stream to obtain an information stream, and speech control is performed according to the information stream.

In an example, prompting the first guide words and the second guide words includes: displaying the first guide words and the second guide words in groups and in order, in which the first guide words precede the second guide words.

In an example, the first guide words include at least two first guide words, and the second guide words include at least two second guide words. Displaying the first guide words and the second guide words in groups and in order includes: dividing the at least two first guide words into at least one first guide word group based on an inherent order of the at least two first guide words, and dividing the at least two second guide words into at least one second guide word group based on an order of the at least two second guide words, wherein in each of the at least one second guide word group, the second speech instructions and the third speech instructions are alternately arranged; displaying the at least one first guide word group; and after displaying the at least one first guide word group, displaying the at least one second guide word group.

In an example, displaying the first guide words and the second guide words in groups and in order includes: displaying at least one first guide word group and at least one second guide word group cyclically, in which the first guide words are divided into the at least one first guide word group, the second guide words are divided into the at least one second guide word group.

In an example, determining the second guide words based on the second speech instructions and the third speech instructions includes: selecting the second guide words from the second speech instructions and the third speech instructions according to a response frequency of each of the second speech instructions and the third speech instructions.

In an example, the second guide words include at least two second guide words, and the at least two second guide words are ranked according to a response frequency of each of the at least two second guide words.

Embodiments of the present disclosure provide a speech control device. The device includes: a first determining module, an obtaining module, a second determining module, and a prompting module.

The first determining module is configured to determine first guide words according to first speech instructions, in which a display page can respond to the first speech instructions. The obtaining module is configured to obtain second speech instructions and third speech instructions, in which a foreground application to which the display page belongs can respond to the second speech instructions, background applications can respond to the third speech instructions. The second determining module is configured to determine second guide words based on the second speech instructions and the third speech instructions. The prompting module is configured to prompt the first guide words and the second guide words in a target operating state. In the target operating state, audio is continuously acquired to obtain an audio stream, speech recognition is performed on the audio stream to obtain an information stream, and speech control is performed according to the information stream.

Embodiments of the present disclosure provide an electronic device. The electronic device includes at least one processor and a memory. The memory is coupled to the at least one processor, and configured to store executable instructions. When the instructions are executed by the at least one processor, the at least one processor is caused to execute the speech control method according to embodiments of the first aspect of the present disclosure.

Embodiments of the present disclosure provide a non-transitory computer readable storage medium having computer instructions stored thereon. When the computer instructions are executed by a processor, the processor is caused to execute the speech control method according to embodiments of the first aspect of the present disclosure.

The present disclosure may have following advantages and beneficial effects. The first guide words are determined according to first speech instructions that the display page can respond, second speech instructions that the foreground application to which the display page belongs can respond and third speech instructions that background applications can respond are obtained, the second guide words are determined based on the second speech instructions and the third speech instructions, and the first guide words and the second guide words are prompted in the target operating state, and in the target operating state, audio is continuously acquired to obtain an audio stream, speech recognition is performed on the audio stream to obtain an information stream, and speech control is performed according to the information stream. Thus, by prompting the first guide words and the second guide words in the target operating state, when the user interacts with the electronic device through speech according to the first guide words and the second guide words, the user does not need to input the wake word frequently, which can simplify the user operation, and improve the user experience.

Other effects of the above alternatives are illustrated in the context of specific embodiments below.

### BRIEF DESCRIPTION OF THE DRAWINGS

The drawings are for better understanding of the solution and do not constitute a limitation to this application. The above and/or additional aspects and advantages of embodiments of the present disclosure will become apparent and more readily appreciated from the following descriptions made with reference to the drawings, in which:
FIG. 1 is a flowchart of a speech control method according to some embodiments 1 of the present disclosure.
FIG. 2 is a schematic diagram of a display page according to some embodiments of the present disclosure.
FIG. 3 is a flowchart of a speech control method according to some embodiments of the present disclosure.
FIG. 4 is a block diagram of a speech control device according to some embodiments of the present disclosure.
FIG. 5 is a flowchart of a speech control method according to some embodiments of the present disclosure.
FIG. 6 is a block diagram of a speech control device according to some embodiments of the present disclosure.
FIG. 7 is a schematic diagram of an electronic device according to some embodiments of the present disclosure.

### DETAILED DESCRIPTION

Exemplary embodiments of the present disclosure are described below with reference to the accompanying drawings, which include various details of the embodiments of the present disclosure to facilitate understanding, which are explanatory. Therefore, those skilled in the art should understand that various changes and modifications can be made to the embodiments described herein. Also, for clarity and conciseness, descriptions of well-known functions and structures are omitted in the following description.

A speech control method, a speech control device, an electronic device, and a readable storage medium will be described below with reference to the accompanying drawings.

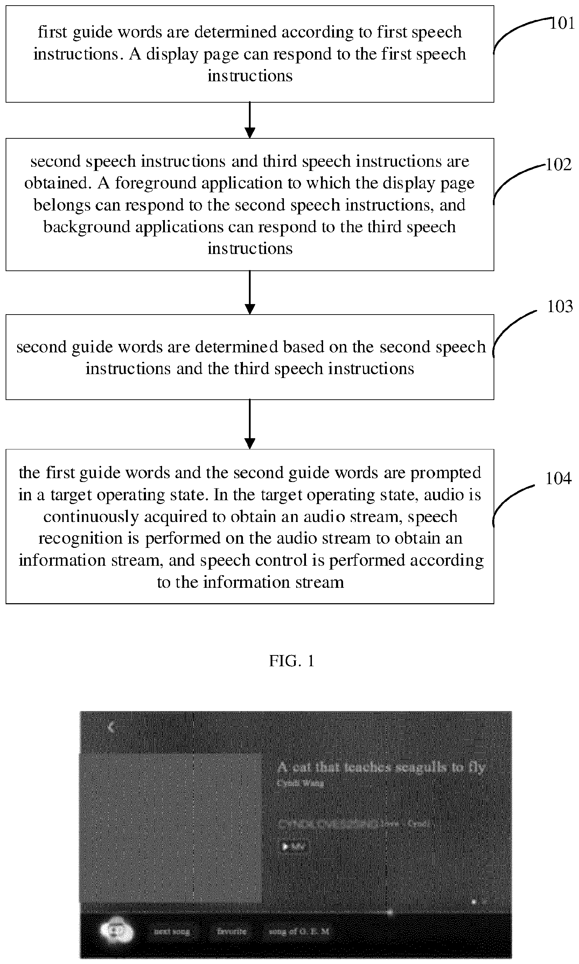

FIG. 1 is a flowchart of a speech control method according to some embodiments of the present disclosure. In an embodiment of the present disclosure, as an example, the speech control method may be applicable to a speech control device. The speech control device may be applied to any electronic device, such that the electronic device can perform the speech control function.

In an example, the electronic device may be a personal computer (PC), a cloud device, a mobile device, an intelligent speaker, etc. The mobile device may be a hardware device having various operating systems, touch screens and/or display screens, such as a telephone, a tablet, a personal digital assistant, a wearable device, an onboard device.

As illustrated in FIG. 1, the speech control method may include the following.

At block 101, first guide words are determined according to first speech instructions. A display page can respond to the first speech instructions.

The guide words may include keywords configured to prompt the user for voice input when the user interacts with the electronic device. In an example of the present disclosure, the first speech instructions may be preset based on a built-in program of the electronic device, or in order to meet the personalized requirements of the user, the first speech instructions may be set by the user, which is not limited in the present disclosure. For example, when the display page of the electronic device is a song play page, the first speech instructions may include "next song", "change a song", "pause", "previous song", or "favorite".

In some embodiments, during the speech interaction between the user and the electronic device, after the electronic device detects the current display page, the electronic device may determine the first guide words according to the first speech instructions that the current display page can respond. For example, when the display page of the electronic device is a video play page, the first speech instructions may include "play next episode", "change to another TV series", "pause", "play previous episode", and "favorite". Based on these first speech instructions, the first guide words may be determined as "next episode", "switch", "pause", "previous episode", and "favorite".

In a scenario, when the number of the first guide words is limited, the first speech instructions may be ranked in order from highest to lowest based on the response frequency of each of the first speech instructions when the user interacts with the electronic device, and the first guide words may be determined based on the top ranked first speech instructions.

As an example, when the number of first guide words is limited to 3, according to the response frequency of each of the first speech instructions, the first speech instructions are ranked as "play next episode", "pause", "play previous episode", "change to another TV series", and "favorite", and then the first guide words may be determined as "next episode", "pause", and "previous episode".

At block 102, second speech instructions and third speech instructions are obtained. A foreground application to which the display page belongs can respond to the second speech instructions, and background applications can respond to the third speech instructions.

In an embodiment of the present disclosure, the foreground application may refer to an application that the user directly interacts with in the current display page of the electronic device. For example, when the current display page of the electronic device is a weather forecast page, the foreground application corresponding to the current display page may be a weather application.

In an embodiment of the present disclosure, during the speech interaction between the user and the electronic device, the speech control device may obtain the second speech instructions that the foreground application to which the display page of the electronic device belongs can respond.

For example, when the electronic device is an intelligent speaker, the wake word of the intelligent speaker may be "Xiaodu, Xiaodu". When the user inputs "Xiaodu, Xiaodu, I want to listen to a song" through speech, the electronic device may display a music application on the display page according to the speech instruction input by the user, the music application may be the foreground application. The speech control device can obtain the speech instructions that the music application can respond, for example, the speech instructions may include "play next song", "change to another song, "pause", "play previous song", and "favorite".

At block 103, second guide words are determined based on the second speech instructions and the third speech instructions.

In an example of the present disclosure, during the speech interaction between the user and the electronic device, an application that the user directly interacts and is displayed on the display page of the electronic device is denoted as the foreground application, and the applications that the user does not interact and run in the background of the electronic device may be denoted as the background application. For example, when the foreground application corresponding to the display page is a weather application, and the background applications may include a music application, a video application, a shopping application, or a reading application.

In an example of the present disclosure, each of the applications of the electronic device may have speech instructions that they can respond, the speech instructions may be preset based on the built-in program of the electronic device, or in order to meet the personalized requirements of the user, the speech instructions may be set by the user, which is not limited in the present disclosure. For example, for a reading application, the speech instruction may include "open e-book", "turn to next page", and "favorite", and the like, and the speech instruction that a shopping application can respond may include "add item to shopping cart", "check out shopping cart", "pay", and "acquire item".

In an example of the present disclosure, during the speech interaction between the user and the electronic device, the speech control device may determine the second guide words according to the second speech instructions that the foreground application to which the display page belongs can respond and the third speech instructions that background applications can respond. Alternatively, the second guide words may be determined according to the second speech instructions and the response frequency of each of the speech instructions.

FIG. 2 is a schematic diagram of a display page according to some embodiments of the present disclosure. As illustrated in FIG. 2, the foreground application corresponding to the current display page of the electronic device is a music application, and the speech instructions that the foreground application can respond may include "play next song", "change to another song, "pause", "play previous song", and "favorite". In this case, the background applications may be a weather application, a video play application, and the like. Based on the second speech instructions that the foreground application can respond and the third speech instructions that the background applications can respond, it may be determined that the second guide words include "next song", "favorite", and "song of G.E.M".

At block 104, the first guide words and the second guide words are prompted in a target operating state. In the target operating state, audio is continuously acquired to obtain an audio stream, speech recognition is performed on the audio stream to obtain an information stream, and speech control is performed according to the information stream.

In an example of the present disclosure, the target operating state may be a listening state. In an implementation, during the speech interaction between the user and the electronic device, when the electronic device is in a non-listening state, the wake word input by the user may be obtained, the audio clip may be obtained according to the wake word, the control intent corresponding to the audio clip may be obtained, and the control instruction corresponding to the control intent can be performed, and the electronic device can be controlled to switch from the non-listening state to the listening state. In the listening state, the audio input by the user may be acquired continuously to obtain the audio stream, speech recognition may be performed on the audio stream to obtain the information stream, and speech control may be performed according to the information stream.

For example, when the electronic device is an intelligent speaker, the user may input "Xiaodu, Xiaodu, play a song A" or "Xiaodu, Xiaodu, I want to listen to a song", the electronic device may recognize the audio clip "play song A" or "I want to listen to a song" input after the wake word, and play the corresponding song. The electronic device may be controlled to switch to the listening state, in the listening state, audios can be continuously acquired to obtain the audio stream, speech recognition can be performed on the audio stream to obtain the information stream, and speech control can be performed according to the information stream. Thus, when the electronic device is in the target operating state, the user can perform real-time interaction or continuous interaction with the electronic device without inputting the wake word, thereby simplifying the user operation, and improving the user experience.

During the speech interaction between the user and the electronic device, both the second speech instructions and the third speech instructions may include speech instructions that require the user to repeatedly input the wake word to before the electronic device responds and the speech instructions that do not require the user to repeatedly input the wake word to continue interacting with the electronic device. In an embodiment of the present disclosure, the first guide words and the second guide words are speech instructions that do not require the user to repeatedly input the wake word to continue interacting with the electronic device.

In an example of the present disclosure, when the electronic device is in the target operating state, the first guide words and the second guide words are prompted on the display page, the user can continuously interact with the electronic device according to the first guide words and the second guide words, without inputting the wake word frequently, thereby simplifying the user operation.

The first guide words and the second guide words may be displayed on any position of the display page of the electronic device, for example, the first guide words and the second guide words may be displayed on a lower portion, an upper portion, a left portion, or a right portion of the display page, which is not limited in the present disclosure.

For example, in the target operating state, the first guide words and the second guide words on the display page of the electronic device include "next song", "favorite", and "today's weather", when the user inputs "how's the weather today" through speech, it may be determined that the audio data input by the user matches the guide words displayed on the display page of the electronic device, the control instruction corresponding to the audio data may be performed. When the user inputs "check out shopping cart" through speech, it may be determined the audio data input by the user does not match the guide words displayed on the display page of the electronic device, the control instruction corresponding to the "check out shopping cart" will not be performed, and the user needs to input the wake word again, to perform the control instruction corresponding to the speech data.

With the speech control method according to embodiments of the present disclosure, the first guide words are determined according to first speech instructions that the display page can respond, second speech instructions that the foreground application to which the display page belongs can respond and third speech instructions that background applications can respond are obtained, the second guide words are determined based on the second speech instructions and the third speech instructions, and the first guide words and the second guide words are prompted in the target operating state, and in the target operating state, audio is continuously acquired to obtain an audio stream, speech recognition is performed on the audio stream to obtain an information stream, and speech control is performed according to the information stream. Thus, by prompting the first guide words and the second guide words in the target operating state, when the user interacts with the electronic device through speech according to the first guide words and the second guide words, the user does not need to input the wake word frequently, which can simplify the user operation, and improve the user experience.

Based on the above embodiments, in an implementation, when the first guide words and the second guide words are prompted in the target operating state, the first guide words and the second guide words may be displayed in groups and in order, such that the user can intuitively learn the speech instructions that allow the user to interact with the electronic device without inputting the wake word, the human-machine dialogue may be natural and real, and user experience can be improved. Details will be described below in combination with following embodiments.

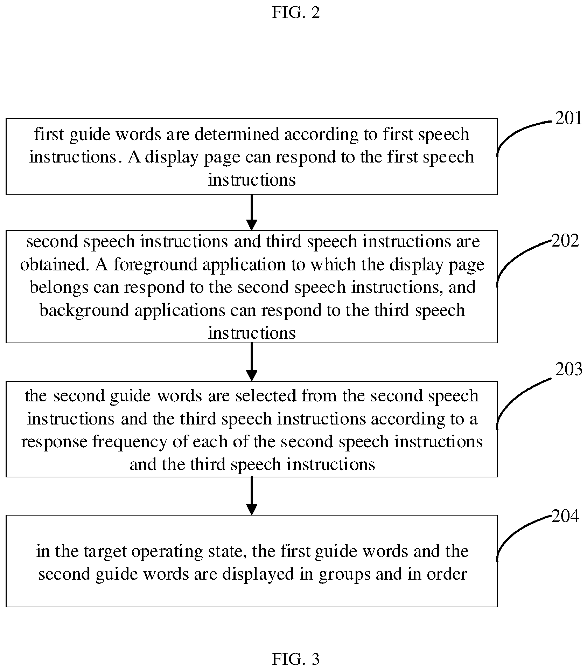

FIG. 3 is a flowchart of a speech control method according to some embodiments of the present disclosure. As illustrated in FIG. 3, the speech control method may include the following.

At block 201, first guide words are determined according to first speech instructions. A display page can respond to the first speech instructions.

At block 202, second speech instructions and third speech instructions are obtained. A foreground application to which the display page belongs can respond to the second speech instructions, and background applications can respond to the third speech instructions.

In an example of the present disclosure, for the implementation processes of blocks 201 and 202, reference may be made to the implementation processes of blocks 101 and 102 in the foregoing embodiments, and details are not described herein again.

At block 203, the second guide words are selected from the second speech instructions and the third speech instructions according to a response frequency of each of the second speech instructions and the third speech instructions.

The second guide words may include at least two second guide words, and the at least two second guide words are ranked according to a response frequency of each of the at least two second guide words. The greater the response frequency of the second guide word is, the higher the ranking.

In an example of the present disclosure, the response frequency may refer to a speech input frequency during the speech interaction between the user and the electronic device within a preset time period. The preset time period may be one year, one week, or one day, which is not limited in the present disclosure.

In an example of the present disclosure, after the second speech instructions that the foreground application can respond and the third speech instructions that background applications can respond are obtained, based on the response frequency of each of the second speech instructions and the third speech instructions, the speech instructions with high response frequencies may be selected from the second speech instructions and the third speech instructions, and determined as the second guide words.

In an embodiment, when interacting with the electronic device, different users may have different interests, or different users may have different speaking styles, the input speech data of the different users is different, and the response frequency of the electronic device to each of the different speech instructions are also different. Therefore, the second guide words may be determined based on the response frequency of each of the second speech instructions and the third speech instructions.

For example, when there are three second guide words, and the current display page of the electronic device is a music play page, the second speech instructions that the foreground application to which the music play page belongs can respond may include "next song", "favorite", and "previous song", the third speech instructions that background applications can respond may include "today's weather", "play video", and "check out shopping cart", or the like. Based on the response frequency of each of the second speech instructions and the second speech instructions, the second speech instructions and the third speech instruction may be ranked as "next song", "today's weather", "favorite", "check out shopping cart", "previous song", and "play video", and then the second guide words may be determined as "next song", "today's weather", and "favorite"

At block 204, in the target operating state, the first guide words and the second guide words are displayed in groups and in order.

In an example of the present disclosure, when the electronic device is in the target operating state, the first guide words and the second guide words may be ranked, and the ranked first guide words and second guide words may be displayed in groups. The first guide words precede the second guide words. Since the first guide words are determined based on the first speech instructions that the display page can respond, when the user interacts with the electronic device, there is a high probability that the user may input the speech instruction that matches the first guide word, by ranking the first guide words before the second guide words, the user does not need to input the wake word frequently when the user continuously interacts with the electronic device, thereby simplifying the user operation.

In an example, when the first guide words include at least two first guide words, and the second guide words include at least two second guide words, the at least two first guide words may be divided into at least one first guide word group based on an inherent order of the at least two first guide words, the at least two second guide words may be divided into at least one second guide word group based on an order of the at least two second guide words, and the at least one first guide word group may be displayed, and after the at least one first guide word group is displayed, the at least one second guide word group may be displayed. In each of the at least one second guide word group, the second speech instructions and the third speech instructions may be alternately arranged.

For example, when there are eight first guide words and six second guide words, the eight first guide words may be divided into two groups (including group A and group B), each group A and B has four first guide words, and the eight second guide words may be divided into two groups (including group C and group D), and each group C and D has third second guide words. When the first guide words and the second guide words are displayed on the display page of the electronic device, the first guide words in group A (or group B) may be display first, after the first guide words in group A (or group B) are displayed for a preset time period, such as 10 seconds, the first guide words in group B (or group A) may be displayed, after the first guide words in group B (or group A) are displayed for the preset time period (in this case, all the first guide words are displayed), the second guide words in group C (or group D) may be displayed, and after the second guide words in group C (or group D) are displayed for the preset time period, the second guide words in group D (or group C) may be displayed. The first guide words and the second guide words may be displayed cyclically in this way.

Alternatively, after the first guide words in group A (or group B) are displayed for the preset time period, the second guide words in group C (or group D) may be displayed, and after the second guide words in group C (or group D) are displayed for the preset time period, the first guide words in group B (or group A) may be displayed, and after the first guide words in group B (or group A) are displayed for the preset time period, the second guide words in group D (or group C) may be displayed. The first guide words and the second guide words may be displayed cyclically in this way.

In an embodiment, the first guide words include at least two first guide words, and the second guide words include at least two second guide words, when the first guide words and the second guide words are displayed in groups and in order, the at least one first guide word group and the at least one second guide word group may be displayed cyclically.

For example, when the first guide words and the second guide words are displayed on the display page of the electronic device, the first guide words in group A and group B may be displayed, and after the preset time period, such as 10 seconds, the second guide words in group C and group D may be displayed.

In an example of the present disclosure, when the second guide words include at least two second guide words, and the at least two second guide words may be ranked according to a response frequency of each of the at least two second guide words.

With the speech control method according to embodiments the present disclosure, first guide words are determined according to first speech instructions that the display page can respond, second speech instructions that the foreground application to which the display page belongs can respond and third speech instructions that background applications can respond are obtained, and the second guide words are selected from the second speech instructions and the third speech instructions according to the response frequency of each of the second speech instructions and the third speech instructions, in the target operating state, the first guide words and the second guide words are displayed in group and in order. Thus, in the target operating state, by displaying the first guide words and the second guide words in groups and in order, the user can intuitively learn the speech instructions that allow the user to interact with the electronic device without inputting the wake word, the human-machine dialogue may be natural and real, and user experience can be improved.

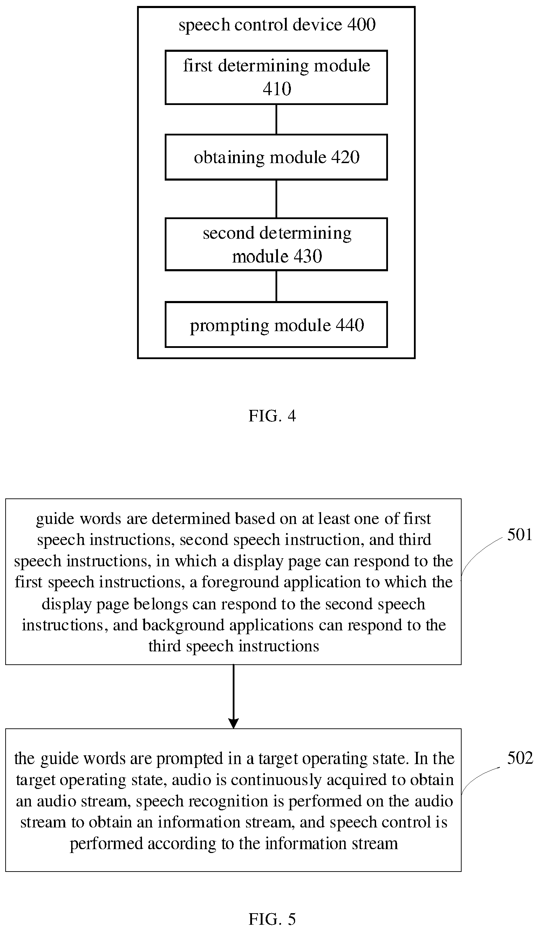

In order to realize the above embodiments, the present disclosure further provides a speech control device. FIG. 4 is a schematic diagram of a speech control device according to some embodiments of the present disclosure.

As illustrated in FIG. 4, the speech control device 400 includes a first determining module 410, an obtaining module 420, a second determining module 430, and a prompting module 440.

The first determining module 410 is configured to determine first guide words according to first speech instructions, in which a display page can respond to the first speech instructions. The obtaining module 420 is configured to obtain second speech instructions and third speech instructions. A foreground application to which the display page belongs can respond to the second speech instructions, and background applications can respond to the third speech instructions. The second determining module 430 is configured to determine second guide words based on the second speech instructions and the third speech instructions. The prompting module 440 is configured to prompt the first guide words and the second guide words in a target operating state. In the target operating state, audio is continuously acquired to obtain an audio stream, speech recognition is performed on the audio stream to obtain an information stream, and speech control is performed according to the information stream.

Moreover, in a possible implementation of the embodiment, the prompting module 440 includes a display unit. The display unit is configured to display the first guide words and the second guide words in groups and in order. The first guide words precede the second guide words.

Furthermore, in a possible implementation of the embodiment, the first guide words include at least two first guide words and the second guide words include at least two second guide words, and the display unit is configured to: divide the at least two first guide words into at least one first guide word group based on an inherent order of the at least two first guide words, and divide the at least two second guide words into at least one second guide word group based on an order of the at least two second guide words, wherein in each of the at least one second guide word group, the second speech instructions and the third speech instructions are alternately arranged; display the at least one first guide word group; and display the at least one second guide word group after displaying the at least one first guide word group.

In a possible implementation of the embodiment, the display unit is configured to: display at least one first guide word group and at least one second guide word group cyclically. The first guide words are divided into the at least one first guide word group, the second guide words are divided into the at least one second guide word group.

In another possible implementation of the embodiment, the second determining module 430 is configured to select the second guide words from the second speech instructions and the third speech instructions according to a response frequency of each of the second speech instructions and the third speech instructions.

In yet another possible implementation of the embodiment, the second guide words include at least two second guide words, and the at least two second guide words are ranked according to a response frequency of each of the at least two second guide words.

It should be noted that, the foregoing explanation of the embodiments of the speech control method may also be applicable for the speech control device of the embodiment, and details are not described herein again.

With the speech control device according to embodiments of the present disclosure, the first guide words are determined according to first speech instructions that the display page can respond, second speech instructions that the foreground application to which the display page belongs can respond and third speech instructions that background applications can respond are obtained, the second guide words are determined based on the second speech instructions and the third speech instructions, and the first guide words and the second guide words are prompted in the target operating state, and in the target operating state, audio is continuously acquired to obtain an audio stream, speech recognition is performed on the audio stream to obtain an information stream, and speech control is performed according to the information stream. Thus, by prompting the first guide words and the second guide words in the target operating state, when the user interacts with the electronic device through speech according to the first guide words and the second guide words, the user does not need to input the wake word frequently, which can simplify the user operation, and improve the user experience.

The present disclosure further provides a speech control method. FIG. 5 is a flowchart of a speech control method according to some embodiments of the present disclosure. As illustrated in FIG. 5, the speech control method may include the following.

At block 501, guide words are determined based on at least one of first speech instructions, second speech instruction, and third speech instructions, in which a display page can respond to the first speech instructions, a foreground application to which the display page belongs can respond to the second speech instructions, and background applications can respond to the third speech instructions.

The guide words may include keywords configured to prompt the user for voice input when the user interacts with the electronic device. In an example of the present disclosure, the first speech instructions may be preset based on a built-in program of the electronic device, or in order to meet the personalized requirements of the user, the first speech instructions may be set by the user, which is not limited in the present disclosure. For example, when the display page of the electronic device is a song play page, the first speech instructions may include "next song", "change a song", "pause", "previous song", or "favorite".

In some embodiments, during the speech interaction between the user and the electronic device, after the electronic device detects the current display page, the guide words may be determined based on at least one of the first speech instructions, the second speech instruction, and the third speech instructions.

In an example of the present disclosure, the guide words may include one or more of the first speech instructions that the display page can respond, the second speech instruction that the foreground application to which the display page belongs can respond, and the third speech instructions that background applications can respond. For example, the guide word may be a combination of first speech instructions and the third speech instructions.

At block 502, the guide words are prompted in a target operating state. In the target operating state, audio is continuously acquired to obtain an audio stream, speech recognition is performed on the audio stream to obtain an information stream, and speech control is performed according to the information stream.

In an example of the present disclosure, the guide words include the first guide words and the second guide words, the target operating state may be a listening state. In an implementation, during the speech interaction between the user and the electronic device, when the electronic device is in a non-listening state, the wake word input by the user may be obtained, the audio clip may be obtained according to the wake word, the control intent corresponding to the audio clip may be obtained, and the control instruction corresponding to the control intent can be performed, and the electronic device can be controlled to switch from the non-listening state to the listening state. In the listening state, the audio input by the user may be acquired continuously to obtain the audio stream, speech recognition may be performed on the audio stream to obtain the information stream, and speech control may be performed according to the information stream.

For example, when the electronic device is an intelligent speaker, the user may input "Xiaodu, Xiaodu, play a song A" or "Xiaodu, Xiaodu, I want to listen to a song", the electronic device may recognize the audio clip "play song A" or "I want to listen to a song" input after the wake word, and play the corresponding song. The electronic device may be controlled to switch to the listening state, in the listening state, audios can be continuously acquired to obtain the audio stream, speech recognition can be performed on the audio stream to obtain the information stream, and speech control can be performed according to the information stream. Thus, when the electronic device is in the target operating state, the user can perform real-time interaction or continuous interaction with the electronic device without inputting the wake word, thereby simplifying the user operation, and improving the user experience.

During the speech interaction between the user and the electronic device, both the second speech instructions and the third speech instructions may include speech instructions that require the user to repeatedly input the wake word to before the electronic device responds and the speech instructions that do not require the user to repeatedly input the wake word to continue interacting with the electronic device. In an embodiment of the present disclosure, the first guide words and the second guide words are speech instructions that do not require the user to repeatedly input the wake word to continue interacting with the electronic device.

In an example of the present disclosure, when the electronic device is in the target operating state, the first guide words and the second guide words are prompted on the display page, the user can continuously interact with the electronic device according to the first guide words and the second guide words, without inputting the wake word frequently, thereby simplifying the user operation.

With the speech control method according to embodiments of the present disclosure, the guide words are determined based on one or more of the first speech instructions that the display page can respond, the second speech instruction that the foreground application to which the display page belongs can respond, and the third speech instructions that background applications can respond, and in the target operating state, the guide word is prompted, and in the target operating state, audio is continuously acquired to obtain an audio stream, speech recognition is performed on the audio stream to obtain an information stream, and speech control is performed according to the information stream. Thus, by prompting the guide words in the target operating state, when the user interacts with the electronic device according to the guide words, the user does not need to input the wake word frequently, which can simplify the user operation, and improve the user experience.

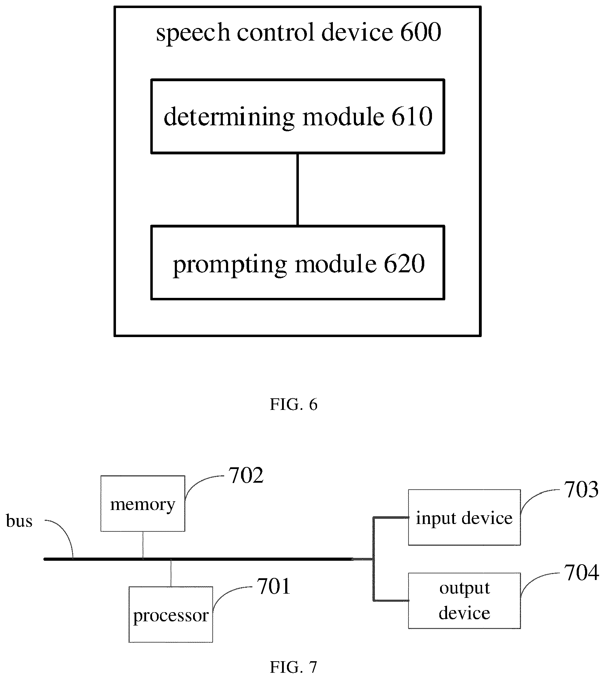

The present disclosure further provides a speech control device. FIG. 6 is a schematic diagram of a speech control device according to some embodiment of the present disclosure. As illustrated in FIG. 6, the speech control device 600 includes a determining module 610, and a prompting module 620.

The determining module 610 is configured to determine guide words based on at least one of first speech instructions, second speech instruction, and third speech instructions. A display page can respond to the first speech instructions, a foreground application to which the display page belongs can respond to the second speech instructions, and background applications can respond to the third speech instructions.

The prompting module 620 is configured to prompt the guide words in a target operating state. In the target operating state, audio is continuously acquired to obtain an audio stream, speech recognition is performed on the audio stream to obtain an information stream, and speech control is performed according to the information stream.

In an example, the determining module 610 includes a first determining module, and a second determining module. The first determining module is configured to determine first guide words according to the first speech instructions. The second determining module is configured to determine second guide words based on the second speech instructions and the third speech instructions.

With the speech control device according to embodiments of the present disclosure, the guide words are determined based on one or more of the first speech instructions that the display page can respond, the second speech instruction that the foreground application to which the display page belongs can respond, and the third speech instructions that background applications can respond, and in the target operating state, the guide word is prompted, and in the target operating state, audio is continuously acquired to obtain an audio stream, speech recognition is performed on the audio stream to obtain an information stream, and speech control is performed according to the information stream. Thus, by prompting the guide words in the target operating state, when the user interacts with the electronic device according to the guide words, the user does not need to input the wake word frequently, which can simplify the user operation, and improve the user experience.

To implement the above embodiments, the present disclosure further provides an electronic device. The device includes at least one processor and a memory. The memory is store executable instructions, and coupled to the at least one processor. When the instructions are executed by the at least one processor, the at least one processor is caused to execute the speech control method according to embodiments of the present disclosure.

To implement the above embodiments, the present disclosure further provides a non-transitory computer readable storage medium having computer instructions stored thereon. When the computer instructions are executed by a processor, the processor is caused to execute the speech control method according to embodiments of the present disclosure.

According to an embodiment of the present disclosure, the present disclosure further provides an electronic device and a readable storage medium.

FIG. 7 is a schematic diagram of an electronic device according to some embodiments of the present disclosure. The electronic device is intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relationships, and functions are merely examples, and are not intended to limit the implementation of this application described and/or required herein.

As illustrated in FIG. 7, the electronic device includes: one or more processors 701, a memory 702, and interfaces for connecting various components, including a high-speed interface and a low-speed interface. The various components are interconnected using different buses and can be mounted on a common mainboard or otherwise installed as required. The processor may process instructions executed within the electronic device, including instructions stored in or on the memory to display graphical information of the GUI on an external input/output device such as a display device coupled to the interface. In other embodiments, a plurality of processors and / or buses can be used with a plurality of memories and processors, if desired. Similarly, a plurality of electronic devices can be connected, each providing some of the necessary operations (for example, as a server array, a group of blade servers, or a multiprocessor system). A processor 701 is taken as an example in FIG. 7.

The memory 702 is a non-transitory computer-readable storage medium according to the present disclosure. The memory stores instructions executable by at least one processor, so that the at least one processor executes the speech control method according to the present disclosure. The non-transitory computer-readable storage medium of the present disclosure stores computer instructions, which are used to cause a computer to execute the speech control method according to the present disclosure.

As a non-transitory computer-readable storage medium, the memory 702 is configured to store non-transitory software programs, non-transitory computer executable programs and modules, such as program instructions/modules corresponding to the speech control method In an example of the present disclosure (For example, the first determining module 410, the obtaining module 420, the second determining module 430, and the prompting module 440 shown in FIG. 4). The processor 701 executes various functional applications and data processing of the server by running non-transitory software programs, instructions, and modules stored in the memory 702, that is, implementing the speech control method in the foregoing method embodiment.

The memory 702 may include a storage program area and a storage data area, where the storage program area may store an operating system and application programs required for at least one function. The storage data area may store data created according to the use of the electronic device, and the like. In addition, the memory 702 may include a high-speed random-access memory, and a non-transitory memory, such as at least one magnetic disk storage device, a flash memory device, or other non-transitory solid-state storage device. In some embodiments, the memory 702 may optionally include a memory remotely disposed with respect to the processor 701, and these remote memories may be connected to the electronic device through a network. Examples of the above network include, but are not limited to, the Internet, an intranet, a local area network, a mobile communication network, and combinations thereof.

The electronic device may further include an input device 703 and an output device 704. The processor 701, the memory 702, the input device 703, and the output device 704 may be connected through a bus or other methods. In FIG. 7, the connection through the bus is taken as an example.

The input device 703 may receive inputted numeric or character information, and generate key signal inputs related to user settings and function control of an electronic device, such as a touch screen, a keypad, a mouse, a trackpad, a touchpad, an indication rod, one or more mouse buttons, trackballs, joysticks and other input devices. The output device 704 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general-purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, speech input, or tactile input).

The systems and technologies described herein can be implemented in a computing system that includes background components (for example, a data server), or a computing system that includes middleware components (for example, an application server), or a computing system that includes front-end components (For example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (egg, a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other.

According to technical solutions of the present disclosure, with the speech control method according to embodiments of the present disclosure, the first guide words are determined according to first speech instructions that the display page can respond, second speech instructions that the foreground application to which the display page belongs can respond and third speech instructions that background applications can respond are obtained, the second guide words are determined based on the second speech instructions and the third speech instructions, and the first guide words and the second guide words are prompted in the target operating state, and in the target operating state, audio is continuously acquired to obtain an audio stream, speech recognition is performed on the audio stream to obtain an information stream, and speech control is performed according to the information stream. Thus, by prompting the first guide words and the second guide words in the target operating state, when the user interacts with the electronic device through speech according to the first guide words and the second guide words, the user does not need to input the wake word frequently, which can simplify the user operation, and improve the user experience.

The various forms of processes shown above can be used to reorder, add, or delete steps. For example, the steps described in this application can be executed in parallel, sequentially, or in different orders, as long as the desired results of the technical solutions disclosed in this application can be achieved, which is no limited herein.

The foregoing specific implementations do not constitute a limitation on the protection scope of the present application. It should be understood by those skilled in the art that various modifications, combinations, sub-combinations, and substitutions may be made according to design requirements and other factors. Any modification, equivalent replacement and improvement shall be included in the protection scope of this application.

## Claims

1. A speech control method, comprising:
determining (501) guide words based on at least one of first speech instructions, second speech instruction, and third speech instructions, in which a display page can respond to the first speech instructions, a foreground application to which the display page belongs can respond to the second speech instructions, and background applications can respond to the third speech instructions; and
prompting (502) the guide words in a target operating state, wherein in the target operating state, audio is continuously acquired to obtain an audio stream, speech recognition is performed on the audio stream to obtain an information stream, and speech control is performed according to the information stream.

2. The speech control method according to claim 1, wherein the guide words comprise first guide words and second guide words, determining guide words based on at least one of first speech instructions, second speech instruction, and third speech instructions and prompting the guide words comprises:
determining (101, 201) the first guide words according to the first speech instructions;
determining (103) the second guide words based on the second speech instructions and the third speech instructions; and
prompting (104) the first guide words and the second guide words in the target operating state.

3. The speech control method according to claim 2, wherein prompting the first guide words and the second guide words comprises:
displaying the first guide words and the second guide words in groups and in order, in which the first guide words precede the second guide words.

4. The speech control method according to claim 2 or 3, wherein the first guide words comprise at least two first guide words and the second guide words comprise at least two second guide words, displaying the first guide words and the second guide words in groups and in order comprises:
dividing the at least two first guide words into at least one first guide word group based on an inherent order of the at least two first guide words, and dividing the at least two second guide words into at least one second guide word group based on an order of the at least two second guide words, wherein in each of the at least one second guide word group, the second speech instructions and the third speech instructions are alternately arranged;
displaying the at least one first guide word group; and
after displaying the at least one first guide word group, displaying the at least one second guide word group.

5. The speech control method according to any one of claim 2 or 3, wherein displaying the first guide words and the second guide words in groups and in order comprises:
displaying at least one first guide word group and at least one second guide word group cyclically, in which the first guide words are divided into the at least one first guide word group, the second guide words are divided into the at least one second guide word group.

6. The method according to any one of claims 2 to 5, wherein determining the second guide words based on the second speech instructions and the third speech instructions comprises:
selecting (203) the second guide words from the second speech instructions and the third speech instructions according to a response frequency of each of the second speech instructions and the third speech instructions.

7. The method according to any one of claims 2 to 6, wherein the second guide words comprise at least two second guide words, and the at least two second guide words are ranked according to a response frequency of each of the at least two second guide words.

8. A speech control device, comprising:
a determining module (610), configured to determine guide words based on at least one of first speech instructions, second speech instruction, and third speech instructions, in which a display page can respond to the first speech instructions, a foreground application to which the display page belongs can respond to the second speech instructions, and background applications can respond to the third speech instructions; and
a prompting module (440, 620), configured to prompt the guide words in a target operating state, wherein in the target operating state, audio is continuously acquired to obtain an audio stream, speech recognition is performed on the audio stream to obtain an information stream, and speech control is performed according to the information stream.

9. The speech control device according to claim 8, wherein the guide words comprise first guide words and second guide words, the determining module (610) comprises a first determining module (410), and a second determining module (430),
the first determining module (410) is configured to determine first guide words according to the first speech instructions;
the second determining module (430) is configured to determine second guide words based on the second speech instructions and the third speech instructions; the prompting module (440, 620) is further configured to prompt the first guide words and the second guide words in the target operating state.

10. The speech control device according to claim 9, wherein the prompting module (440, 620) comprises:
a display unit, configured to display the first guide words and the second guide words in groups and in order, in which the first guide words precede the second guide words.

11. The speech control device according to claim 10, wherein the first guide words comprise at least two first guide words and the second guide words comprise at least two second guide words, and the display unit is configured to:
divide the at least two first guide words into at least one first guide word group based on an inherent order of the at least two first guide words, and divide the at least two second guide words into at least one second guide word group based on an order of the at least two second guide words, wherein in each of the at least one second guide word group, the second speech instructions and the third speech instructions are alternately arranged;
display the at least one first guide word group; and
display the at least one second guide word group after displaying the at least one first guide word group.

12. The speech control device according to claim 10 or 11, wherein the display unit is configured to:
display at least one first guide word group and at least one second guide word group cyclically, in which the first guide words are divided into the at least one first guide word group, the second guide words are divided into the at least one second guide word group.

13. The speech control device according to any one of claims 8 to 12, wherein the second determining module (430) is configured to:
select the second guide words from the second speech instructions and the third speech instructions according to a response frequency of each of the second speech instructions and the third speech instructions.

14. The speech control device according to any one of claim 8 to 13, wherein the second guide words comprise at least two second guide words, and the at least two second guide words are ranked according to a response frequency of each of the at least two second guide words.

15. A non-transitory computer readable storage medium having computer instructions stored thereon, wherein when the computer instructions are executed by a processor, the processor is caused execute the speech control method according to any one of claims 1-7.
